# EUROPÄISCHE PATENTANMELDUNG

(11) **EP 1 586 843 A2**
(43) Veröffentlichungstag der Anmeldung: **19.10.2005**
(21) Anmeldenummer: 05007823.7
(22) Anmeldetag: 09.04.2005
(51) Int. Cl.: F28D 20/00

(54) **Stömungsleitvorrichtung für Wärmespeicher**

(30) Priorität: 15.04.2004 DE 102004018253
(71) Anmelder: Paradigma Energie- und Umwelttechnik GmbH und Co. KG., 76307 Karlsbad (DE)
(72) Erfinder: Meissner, Rolf, Dr.rer.nat., 76307 Karlsbad (DE)

(57) **Zusammenfassung**

Die Erfindung betrifft eine Strömungsleitvorrichtung für Wärmespeicher (1) mit flüssigen Speichermedien, die über einen oder mehrere Wärmeerzeuger aufgeladen und/oder über einen oder mehrere Wärmeverbraucher entladen werden, indem die Speicherflüssigkeit in einem hydraulisch geschlossenen Kreis durch einen Wärmetauscher (2) fließt, dort erwärmt oder abgekühlt wird und anschließend wieder in den Speicher (1) zurückfließt. Die Strömungsleitvorrichtung besteht aus einer das zurückfließende Speichermedium umlenkenden Wand (3) sowie aus einem horizontalen Strömungsverteiler (4), der den umgelenkten senkrechten Volumenstrom gleich verteilt. Die Strömungsleitvorrichtung sorgt dafür, dass das zurückfließende Speichermedium je nach den vorherrschenden Temperaturverhältnissen vollständig oder überwiegend auf der exergetisch günstigeren von zwei möglichen Höhen zurückfließt. Mehrere solcher Umlenkungen können in Reihe geschaltet werden, indem die Austritte der einen Strömungsleitvorrichtung in eine nächste, gleichermaßen funktionierende Vorrichtung gelenkt werden (5).

Die Erfindung kann für Pufferspeicher in der Heizungs- und Solartechnik eingesetzt werden.

## Beschreibung

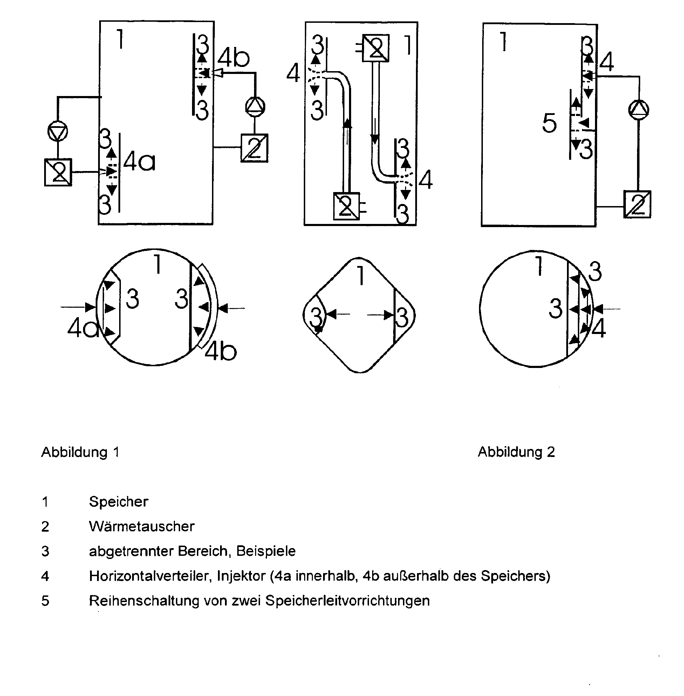

Strömungsleitvorrichtung für Wärmespeicher (1) mit flüssigen Speichermedien gemäß Abb. 1, die über einen oder mehrere Wärmeerzeuger aufgeladen werden, indem die Speicherflüssigkeit in einem hydraulisch geschlossenen Kreis durch einen Wärmetauscher (2) fließt, dort erwärmt wird und anschließend wieder in den Speicher (1) zurückfließt. Solche Wärmetauscher (2) können z. B. Kessel (Öl, Gas, Biomasse, elektrische Erhitzer), Sonnenkollektoren, Wärmepumpen, BHKW oder Prozesswärmetauscher sein.
Ebenso kann diese Strömungsleitvorrichtung für Wärmespeicher (1) mit flüssigen Speichermedien eingesetzt werden, die über einen oder mehrere Wärmeverbraucher entladen werden, indem die Speicherflüssigkeit in einem hydraulisch geschlossenen Kreis durch einen Wärmetauscher (2) fließt, dort abgekühlt wird und anschließend wieder in den Speicher (1) zurückfließt. Solche Wärmetauscher (2) können z. B. Heizkreise (Radiatoren-, Lüftungs-, Wand-, Fußbodenheizkreise) oder Warmwassererwärmer sein.

Da Flüssigkeiten wie Wasser eine mit steigender Temperatur abnehmende Dichte besitzen, wird von einem Wärmeerzeuger das Speichermedium zur Minimierung von Konvektion sinnvollerweise immer oberhalb der Entnahmestelle wieder zurückfließen. Weiterhin ist es üblich, durch spezielle Gestaltung der Zulaufs- und Austrittsvorrichtungen für das Speichermedium dafür zu sorgen, dass dieses bei der Beladung so wenig wie möglich im Wärmespeicher vermischt wird, damit möglichst viel nutzbare Wärme gespeichert werden kann. Der wärmere Wärmeerzeugervorlauf soll sich mit dem Speichermedium im Wärmespeicher möglichst nicht vermischen, sondern sich aufgrund seiner geringeren Dichte darüberschichten und das Speichermedium dann von oben nach unten in Richtung Rücklauf verdrängen.
Bei einem Wärmeverbraucher gilt analog, dass der kältere Wärmeverbraucherrücklauf sich mit dem Speichermedium im Wärmespeicher möglichst nicht vermischen, sondern aufgrund seiner größeren Dichte darunterschichten und dieses dann von unten nach oben in Richtung Vorlauf verdrängen soll.

Wenn der Wärmespeicher eine Temperaturschichtung des Speichermediums aufweist, ist es sinnvoll, den wärmeren Wärmeerzeugervorlauf nicht generell an der heißesten Stelle zurückfließen zu lassen, sondern besser in der Nähe der Schicht, welche annähernd die Vorlauftemperatur hat. Wenn der Wärmespeicher eine Temperaturschichtung des Speichermediums aufbauen soll, weil die Wärme z. B. für unterschiedliche Wärmeverbraucher auf zwei verschiedenen Temperaturniveaus wieder entnommen werden soll, ist es sinnvoll, den Wärmetauscher durch Manipulation der Wärmeerzeugerleistung und/oder des Durchsatzes so zu betreiben, dass sich zeitweise wechselnd zwei verschiedene Vorlauftemperaturen einstellen, wobei die höhere Temperatur dann oben und die tiefere Temperatur in einer tieferen Schicht eingeladen wird. Das ist z. B. bei Pufferspeichern der Fall, welche im obersten Speicherbereich eine Trinkwassererwärmung auf einem hohen Temperaturniveau und in einem tiefer liegendem Speicherbereich eine Raumheizung auf (u. U. deutlich) niedrigerem Temperaturniveau gewährleisten sollen.
Bei Wärmeverbrauchern mit verschiedenen Rücklauftemperaturen gilt analog, dass das Speichermedium zeitweise wechselnd in den untersten Speicherbereich mit der niedrigsten Rücklauftemperatur und in einen höher liegende Speicherbereich mit der höheren Rücklauftemperatur zurückgeführt wird.
Immer wenn ein Wärmeerzeugerkreis startet, dauert es einige Zeit, bis sich am Speichereintritt die Solltemperatur einstellt. Um vorhandene Temperaturschichten nicht zu vermischen, ist es deshalb erstrebenswert, dass bis zum Erreichen der Solltemperatur in eine tiefere Schicht eingeladen wird.

### Vom Stand der Technik sind bekannt:

DE 38 35 096 C2 beschreibt eine senkrecht nach unten führende Einströmung durch das Innere eines Koaxialrohres, dessen äußeres Rohr das innere nach unten überragt, unten geschlossen und mit seitlichen Durchtrittsöffnungen versehen ist. In allen Fließbereichen soll eine im Wesentlichen turbulenzfreie, laminare, von einer Injektionsförderwirkung freie Wasserströmung vorherrschen. Das einströmende Wasser kann nach oben über den Ringspalt oder seitlich an den Durchtrittsöffnungen des äußeren Rohres austreten. Es werden keine Maßnahmen zur Mittelung des dynamischen Druckes über den Querschnitt, d. h. für eine (mikro-)turbulente Strömung getroffen, nicht im Ringspalt und nicht am Austritt des inneren Rohres. Anstelle eines großflächigen, praktisch druckverlustfreien Austritts an der Unterseite in ähnlichem Abstand vom Austritt des inneren Rohres, wie die Länge des Ringspaltes beträgt, werden seitliche Durchtrittsöffnungen mit vorbestimmtem, begrenzten Querschnitt gewählt. Beide Rohre sollen thermisch isoliert sein.

DE 199 37 985 C1 beschreibt einen vertikal angeordneten Hauptstromkanal mit beliebig feinstufig übereinander angeordneten seitlichen Ausströmbereichen entlang des Umfangs, wobei zwischen Hauptstromkanal und umgebendem Speicherbereich ein höherer Trennbereich, ein tieferer oder eine mehrmalig hintereinander abwechselnde Kombination höher- und tiefer liegender Trennbereiche vorgesehen ist.
Es herrscht kein Druckgradient infolge eines Dichteunterschiedes zwischen Hauptkanal und Ausströmöffnung. Ein solcher herrscht zwischen den höher und/oder tiefer liegenden Trennbereichen. Insofern können diese Trennbereiche zwar Strömungsbarrieren bilden, diese verschwinden aber, sobald sie einmal überwunden werden, weil sie dann zu "kommunizierenden Röhren" zwischen Hauptkanal und Austrittsöffnung werden. Der so entstandene Beipass wird dann nur noch durch den Strömungswiderstand der Ausströmöffnung begrenzt. Würde der Fließweg bis zur Ausströmöffnung immer über eine deutliche vertikale Komponente entgegen der in der Leitvorrichtung herrschenden Fließrichtung führen, wie in Gebrauchsmuster 203 01 795.1 beschrieben, dann könnte die Strömungsbarriere dauerhaft bestehen, solange ein Dichteunterschied zwischen Hauptkanal und Ausströmöffnung besteht.
Da im Hauptströmkanal keine Maßnahmen getroffen werden, dass der exergetisch günstigste Fließweg, das ist der, zu dessen Ausströmöffnung der geringste Dichteunterschied besteht, einen geringeren hydraulischen Widerstand (Reibungsdruckverlust) aufweist als der Druckgradient infolge der Dichteunterschiede an den zu überwindenden Höhenbarrieren der übrigen Ausströmöffnungen, kommt es zu partiellen Beipässen mit nachfolgender Vermischung. Bei einem genügend großflächigen Hauptstromkanal und hinreichend hoch (oder tief) zu überwindenden Trennbereichen mit ausgewogenem Strömungswiderstand kommt es zu einer tendenziellen Temperaturschichtung, weil dann die ungewollten Beipassströmungen von einer exergetisch günstigeren Hauptströmung dominiert werden.
Aus dem Stand der Technik sind noch Vorschläge bekannt, bei denen ein vertikaler Hauptströmkanal seitlich mit einseitig öffnenden Ventilen ausgestattet ist. Diese Ventile sind z. B. als schwimmende Kugeln oder in DE 3905874 C2 als mechanische Membranklappen ausgeführt. Sie verhindern einen Beipass aus dem Speicher in den Hauptströmkanal, solange an ihnen vorbei eine Strömung durch den Hauptströmkanal führt, die am Kanalrand einen größeren Unterdruck bewirkt als der lokal herrschende Gegendruck, der sich als Summe des bis zum nächsten Austritt (bzw. zu den nächsten Austritten) noch zu überwindenden Strömungswiderstandes und des bis zum Austritt (bzw. zu den nächsten Austritten) zu überwindenden Druckgradienten infolge des Dichteunterschiedes ergibt. Nur wenn der Gegendruck infolge des Strömungswiderstandes überall vernachlässigbar ist oder gerade von der Summe aus mechanischem Ventilpressdruck und dynamischem (Unter-)druck kompensiert wird, die beide zusätzlich vernachlässigbar klein sein müssen, und die Ventile vollkommen dicht schließen, ist eine exergetisch ideale Temperaturschichtung möglich. Praktisch ist für hinreichend kleine Volumenströme eine tendenzielle Temperaturschichtung möglich, wenn die ungewollten Beipassströmungen infolge "zu früh" öffnender Ventile von einer exergetisch günstigeren Hauptströmung dominiert werden.

Gegenstand der Erfindung ist eine Vorrichtung, die das Einladen des Wärmeerzeugervorlaufs oder des Wärmeverbraucherrücklaufs auf der exergetisch jeweils günstigeren von zwei Speicherhöhen gewährleistet.
Das horizontal eintretende Speichermedium hat eine bestimmte, günstigstenfalls regelbare Temperatur. Die Vorrichtung besteht darin, dass dieses Speichermedium nicht direkt horizontal in den Speicher (1), sondern durch einen abgetrennten Bereich (3) nur wahlweise nach oben oder nach unten hindurch fließen und erst dann in den Speicher (1) eintreten kann. Auf beiden Fließwegen stellt sich jeweils ein dynamischer Druck und ein Reibungsdruckverlust ein. Zusätzlich stellt sich jeweils ein Druckgradient zwischen der Eintrittsstelle und den beiden Austrittsflächen der Vorrichtung ein, der sich aus der Differenz der Dichte des eintretenden Speichermediums und der mittleren Dichte außerhalb der Vorrichtung zwischen der Eintrittsstelle und den beiden Austrittsflächen ergibt. Damit dieser Druckgradient so wirksam werden kann, dass bei geeigneten Temperaturverhältnissen überwiegend jeweils nur einer der beiden Wege durchflossen wird, müssen beide Wege einen deutlichen Höhenunterschied überwinden, der mindestens eine Länge in der Größenordnung des hydraulischen Durchmessers des horizontalen Querschnittes haben sollte. Je größer die Summe beider Wege ist, um so ausgeprägter ist der Effekt. Vorteilhaft ist es, wenn beide Wege etwa gleich lang sind bzw. die gleichen Strömungswiderstände aufweisen.
Die Vorrichtung ist so dimensioniert, dass für beide Wege der dynamische Druck kleiner ist als der Druckgradient infolge der erwarteten Dichtedifferenz, und das nicht nur lokal, sondern über die gesamte Fläche der Vorrichtung, so dass in der Vorrichtung keine hydraulischen Durchschläge auftreten können. Dazu strömt das Speichermedium horizontal in die Vorrichtung, wo es durch einen Injektor (4a, 4b) horizontal in der Fläche verteilt wird und dann senkrecht zu dieser Fläche nach oben und unten gleichmäßig verteilt abfließt, was schließlich zu einer (mikro-)turbulenten Strömung mit gleichmäßig niedriger vertikaler Strömungsgeschwindigkeit bzw. zu einem gemittelten sehr kleinen dynamischen Druck in der gesamten Vorrichtung führt und sowohl den Aufbau einer laminaren Strömung mit einer entsprechend ungünstigen Geschwindigkeitsverteilung als auch einen (makro-)turbulenten Durchschlag verhindert.
Die Größe des Querschnitts der Vorrichtung richtet sich nach dem Volumenstrom, dem Ausdehnugskoeffizienten des Speichermediums und nach dem Temperaturbereich, in welchem die beabsichtigte Volumenstromumlenkung stattfinden soll. Die Querschnittsform der Vorrichtung kann vielfältig sein. Es sollen technologisch besonders günstige Formen beschrieben werden. Diese ergeben sich einfach durch eine seitlich hydraulisch dichte Abtrennung (3) eines kleinen Bereichs des Wärmespeichers (1), der oben und unten offen ist, z. B. durch eine ebene, gewinkelte oder gekrümmte senkrechte Wand (3). In diesen Bereich tritt das aus dem Wärmetauscher (2) kommende Speichermedium etwa in der Mitte in einen Injektor (4) ein, der den Volumenstrom horizontal gleichmäßig verteilt. Diese Verteilung kann innerhalb (4a) oder außerhalb (4b) des abgetrennten Bereiches erfolgen. Erfolgt sie innerhalb, muss der Injektor entweder so klein sein, dass er den Querschnitt des abgetrennten Bereiches nicht wesentlich verengt, oder die Verteilung muss fast vollkommen ohne zusätzliche Druckverluste erfolgen.
Um mehr als zwei Temperaturschichten auszubilden, können die Austritte der Vorrichtung in eine nächste, gleichermaßen funktionierende Vorrichtung gelenkt werden (5), siehe Abb. 2.

Allerdings muss geometrisch gewährleistet sein, dass der exergetisch günstigste Fließweg, das ist derjenige, zu dessen Austritt der geringste Dichteunterschied besteht, immer einen geringeren hydraulischen Widerstand (Reibungsdruckverlust) aufweist, als der Druckgradient infolge der Dichteunterschiede und der dynamische Druck zu den übrigen Austritten zusammen betragen. Wenn diese Bedingung verletzt ist, kommt es zu partiellen Beipässen mit nachfolgender Vermischung.

## Patentansprüche

1. Strömungsleitvorrichtung für einen hydraulisch geschlossenen Kreis, mit dem einem Wärmespeicher (1) mit flüssigem Speichermedium an einer Stelle Flüssigkeit entnommen wird, das sich dann in einem Wärmetauscher (2) innerhalb oder außerhalb des Wärmespeichers (1) erwärmt oder abkühlt und anschließend an einer anderen tieferen oder höheren Stelle durch diese Vorrichtung hindurch in den Speicher (1) zurückfließt,
**dadurch gekennzeichnet,**
**dass** diese Strömung mittels dieser Vorrichtung nicht horizontal und direkt, sondern über einem vom Speicher abgetrennten Bereich (3) nur nach oben oder nach unten über in der Größenordnung gleich lange Wege, die einzeln mindestens eine Länge in der Größenordnung des hydraulischen Durchmessers der gewählten Querschnitte haben, wegfließt und am Ende der beiden Wege über den gesamten oder einen in der Größenordnung gleich großen Querschnitt in den Speicher (1) eintritt, wobei der horizontale Querschnitt dieses abgetrennten Bereiches so nach dem Volumenstrom ausgelegt ist, dass der maximale, senkrecht wirkende Staudruck am oberen und unteren Ende des Bereiches (3) kleiner ist als der Schweredruckunterschied aufgrund eines vorgesehenen Temperaturunterschiedes zwischen der Temperatur des in die Vorrichtung eintretenden Speichermediums und der über die Höhe dieses Bereiches gemittelten Temperatur außerhalb dieses Bereiches (3),
und **dass** diese Strömung horizontal in den abgetrennten Bereich (3) über einen Verteiler oder Injektor (4) innerhalb (4a) oder außerhalb (4b) des abgetrennten Bereiches (3) eintritt, der sie in ihrem senkrechten Weiterfluss in beide Richtungen gleichmäßig turbulent über den Querschnitt verteilt.

2. Strömungsvorrichtung gemäß Anspruch 1, **dadurch gekennzeichnet, dass** der durch die Vorrichtung abgetrennte oben und unten offene Speicherbereich (3) durch eine seitlich vollkommen dicht an die Speicherwand angrenzende Wand hergestellt wird.

3. Strömungsvorrichtung gemäß Anspruch 1, **dadurch gekennzeichnet, dass** der durch die Vorrichtung abgetrennte oben und unten offene Speicherbereich (3) durch eine diesen Bereich vollständig einschließende Wand hergestellt wird.

4. Strömungsvorrichtung gemäß Anspruch 1, 2 und 3, **dadurch gekennzeichnet, dass** die Vorrichtung die Abtrennung des Speicherbereichs (3) nach oben und nach unten auf unterschiedliche Weise herstellt.

5. Strömungsvorrichtung gemäß Anspruch 1, 2, 3 und 4, **dadurch gekennzeichnet, dass** mehrere solcher Vorrichtungen in Reihe geschaltet werden, indem die Austritte der einen Vorrichtung in eine nächste, gleichermaßen funktionierende Vorrichtung gelenkt werden (5).
